Europäisches Patentamt

European Patent Office

Office européen des brevets

(11) Publication number: **0 146 222**
**B1**

(12) **EUROPEAN PATENT SPECIFICATION**

(45) Date of publication of patent specification: **25.04.90**

(51) Int. Cl.⁵: **F 24 D 5/00**

(21) Application number: **84306879.2**

(22) Date of filing: **09.10.84**

(54) Heating System.

(30) Priority: **12.10.83 GB 8327307**

(43) Date of publication of application:
**26.06.85 Bulletin 85/26**

(45) Publication of the grant of the patent:
**25.04.90 Bulletin 90/17**

(84) Designated Contracting States:
**AT BE CH DE FR IT LI LU NL SE**

(56) References cited:
**CH-A- 337 638**
**DE-A-2 519 091**
**GB-A- 969 959**

**PATENT ABSTRACTS OF JAPAN, vol. 6, no. 138
(M-145)1016r, 27th July 1982; & JP - A - 57 60118
(ISHIDA SANGYO) 10-04-1982**

(73) Proprietor: **Admiral Design and Research
Limited
3 Avon Riverside Estate
Portway, Bristol BS11 9DB (GB)**

(72) Inventor: **Jones, David Mervyn
4 Chantry Grove
Blaise Wood Henbury Bristol, BS11 0QB (GB)**
Inventor: **Maund, John Keith
432 Quinton Road West
Birmingham, B32 1QG (GB)**

(74) Representative: **Newstead, Michael John et al
Page & Co. Temple Gate House Temple Gate
Bristol BS1 6PL (GB)**

**Description**

This invention relates to heating systems and more specifically to radiant heating systems.

In DE—A—2 519 091 there is disclosed a heater system comprising at least one radiant heater having a burner, supply means for supplying air to the burner and exhaust means for the passage of exhaust gas from the burner. The system includes ducting having a first passageway which communicates with said air supply means for the heating system and a second passageway which communicates with the exhaust means of the heating system. Each of the passgeways is open at at least one end so that the first passageway can supply air to the supply means and exhaust gas can expel from the second passageway. The system also includes a substantially horizontally arranged tube one end of which communicates with the burner and the other end of which communicates with the exhaust means at substantially the same position as the burner. The Patent Abstracts of Japan, vol. 6, No. 138 (M-145) [1016] disclose a heating system with heat exchange relation between the air supply duct and the exhaust duct.

According to the present invention there is provided a heating system, comprising at least one radiant heater having a burner, supply means for supplying air to the burner and exhaust means for the passage of exhaust gas from the burner; said system including ducting having a first passageway which communicates with said air supply means for said heating system and a second passageway which communicates with said exhaust means of said heating system, each of said passageways being open at at least one end so that said first passageway can supply air to the supply means and exhaust gas can expel from said second passageway, said system also including a substantially horizontally arranged tube one end of which communicates with the burner and the other end of which communicates with the exhaust means at substantially the same position as the burner; characterised in that the air supply means is arranged above the tube, which acts as a heater; in that the exhaust gas means is arranged above the air supply means; and in that said first and second passageways are in heat exchange relation with each other for heat transfer from said second passageway to said first passageway.

Preferably the ducting includes at least one piece of single sheet material which has been bent and formed to provide the first and second passageways. In such a case, preferably the ducting is formed in unit lengths serially connected together, each of which lengths comprises such a piece of single sheet material.

The ducting may be parallelogrammic in cross-section. More particularly, the ducting in cross-section may have the form of a rhombus.

In order that the invention may be more readily understood, an embodiment thereof will now be described, by way of example, reference being made to the accompanying drawings, wherein:—

Figure 1 shows a heating system according to an example of the invention;

Figure 2 shows part of the ducting of Figure 1 in greater detail and to a larger scale;

Figure 3 shows how the ducting of Figures 1 and 2 is constructed; and

Figure 4 is a schematic, plan view of an example of a heating system layout.

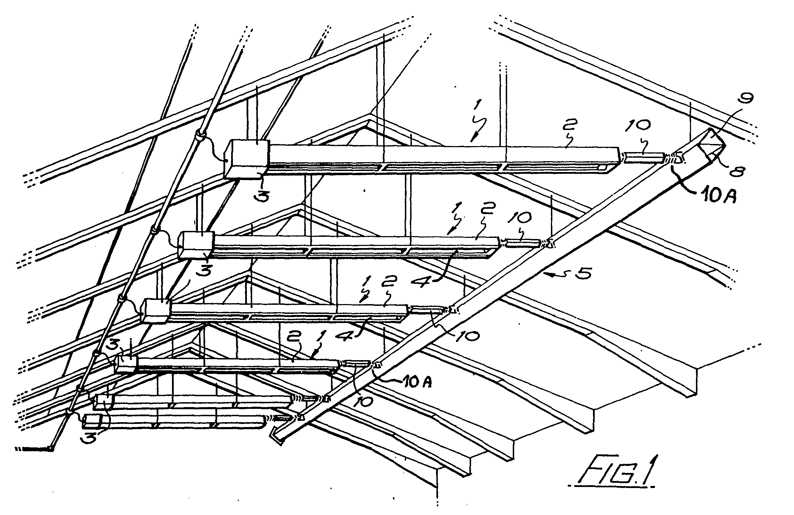

Referring to the drawings, Figure 1 shows a bank of radiant heaters 1 slung below a ceiling, each of the radiant heaters having a reflective housing 2 having at the top a lower, air inlet passageway which communicates with a burner for supplying hot (as explained below) air to the burner. The burner is in a burner and suction fan control unit 3. Above the air inlet passageway is an upper, exhaust gas passageway which communicates with the suction fan, receiving exhaust gas therefrom. Under the housing 2 is a U-tube 4, one end of which communicates with the burner, and hence with the air inlet passageway and the other end of which communicates with the suction fan and hence with the exhaust gas passageway.

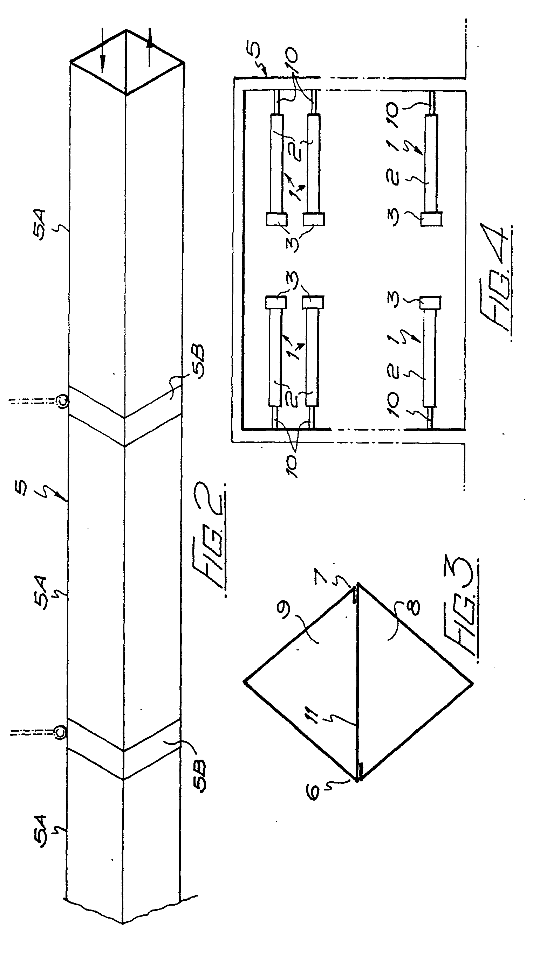

For supplying air to the lower passageway and receiving exhaust gas from the upper passageway of each housing 2, there is provided a run of ducting 5 which at each end communicates with outside air through a wall of the building in the manner of a balanced flue. Ducting 5, see Figure 2, is formed by serially connecting together individual unit lengths 5A of ducting by means of coupling devices 5B in order to provide the requisite amount and form of ducting for the system.

Each of the unit lengths of ducting 5A, referring now to Figure 3, is formed from a single sheet of metal, such as stainless steel or galvanized steel, which is bent and formed to have the cross-sectional shape, i.e. substantially that of a rhombus, as shown in Figure 3, welded joints being provided as indicated by reference numerals 6 and 7. The ducting 5 thus provides first and second generally V-shaped passageways 9 and 8, separated one from the other by a portion 11 of the metal sheet, the second passageway 8 being in communication with the upper passageways of the housings 2 of the heaters, and the first passageway 9 being in communication with the lower passageways of the housings, such communication being via respective lengths of trunking 10 each constructed like the trunking 5, expansion joints 10A being provided to accommodate relative movement between the ducting 5 and trunking 10.

Adjacent each of the housings 2, that is between each length of trunking 10 and the respective housing 2, there is provided a device which effectively inverts the passageways in the length of trunking such that the lower passageway of each housing 2 communicates with the upper passageway 9 of the ducting 5, and such that the upper passageway of each housing 2 communicates with the lower passageway 8 of the ducting 5. Such an arrangement is desirable so that the maximum amount of heat in the exhaust gas can be utilised to pre-heat the air passing to the burners of the heaters. Exhaust gas issuing from the U-tubes 4 of the heaters leaves the U-tubes at approximately 200°C and because heated air rises, the heated air moves towards the upper regions of the passageway 8 of the ducting, i.e. adjacent the portion 11 of the ducting. Thus by heat transference through the portion 11, the cold air entering into and passing along passageway 9 is pre-heated prior to passing to the burners. By this arrangement, less fuel is required to raise the temperature of the air passing to the U-tube. If the flows of air and exhaust gas were not inverted, such that the passageway 9 was the exhaust gas passageway and the passageway 8 was for incoming air, exhaust gas would rise within the upper passageway 9, that is it would move away from the portion 11 of the ducting so that less heat would be available for raising the temperature of the incoming air in the lower passageway 8.

In use of the heaters 1, air is drawn into the lower passageway of each housing 2, via the upper passageway 9 of the ducting 5, and exhaust gas is expelled from the upper passageway of each housing 2 and thence to atmosphere via the lower passageway 8 of the ducting 5.

Figure 4 shows a schematic plan view of a possible layout of heaters 1 and ducting 5 and trunking 10.

## Claims

1. A heating system, comprising at least one radiant heater (1) having a burner, supply means for supplying air to the burner and exhaust means for the passage of exhaust gas from the burner; said system including ducting (5) having a first passageway (9) which communicates with said air supply means for said heating system and a second passageway (8) which communicates with said exhaust means of said heating system, each of said passageways (9, 8) being open at at least one end so that said first passageway (9) can supply air to the supply means and exhaust gas can expel from said second passageway (8), said system further including a substantially horizontally arranged tube (4) one end of which communicates with the burner and the other end of which communicates with the exhaust means at substantially the same position as the burner; characterised in that the air supply means is arranged above the tube (4), which acts as a heater; in that the exhaust gas means is arranged above the air supply means; and in that the first and second passageways (9, 8) are in heat exchange relation with each other for heat transfer from said second passageway (8) to said first passageway (9).

2. A heating system as claimed in Claim 1, wherein said ducting (5) includes at least one piece of single sheet material which has been bent and formed to provide said first and second passageways (9, 8).

3. A heating system according to Claim 2, wherein said ducting (5) is formed in unit lengths (5A) serially connected together, each of which lengths (5A) comprises such a piece of single sheet material.

4. A heating system according to Claim 1, 2 or 3, wherein said ducting (5) is parallelogramic in cross-section.

5. A heating system according to Claim 4, wherein said ducting (5) in cross-section has the form of a rhombus.

## Patentansprüche

1. Heizungssystem, bestehend aus wenigstens einem Flächenheizkörper (1) mit einem Brenner, mit Mitteln zum Zuführen von Luft zum Brenner und mit Auslaßmitteln zum Abführen von Abgas vom Brenner, wobei das System eine Leitung (5) mit einem ersten Leitungsgang (9), der mit den Luftzuführmitteln des Heizungssystems kommuniziert und einen zweiten Leitungsgang (8) enthält, der mit den Auslaßmitteln des Heizungssystems kommuniziert, und wobei jeder der Leitungsgänge (9, 8) an wenigstens einem Ende offen ist, so daß der erste Leitungsgang (9) den Zuführmitteln Luft zuführen und Abgas aus dem zweiten Leitungsgang (8) ausstoßen kann und wobei das Heizungssystem ferner ein im wesentlichen horizontales Rohr (4) aufweist, dessen eines Ende mit dem Brenner und dessen anderes Ende mit den Auslaßmitteln an der im wesentlichen gleichen Stelle wie der Brenner kommuniziert, dadurch gekennzeichnet, daß die Luftzuführmittel oberhalb des Rohres (4) angeordnet sind, welches als Heizkörper wirkt, daß die Abgasmittel oberhalb der Luftzuführmittel angeordnet sind und daß die ersten und zweiten Leitungsgänge (9, 8) für den Wärmetransport vom zweiten Leitungsgang (8) zum ersten Leitungsgang (9) miteinander in einer Wärmeaustauschbeziehung stehen.

2. Heizungssystem nach Anspruch 1, dadurch gekennzeichnet, daß die Leitung (5) aus wenigstens einem Stück eines einzelnen blatt- oder plattenförmigen Materials besteht, das zur Bildung der ersten und zweiten Leitungsgänge (9, 8) gebogen und geformt ist.

3. Heizungssystem nach Anspruch 2, dadurch gekennzeichnet, daß die Leitung (5) aus Längeneinheiten (5a) besteht, die in Reihe miteinander verbunden sind, wobei jede der Einheiten (5a) aus einem Stück eines einzelnen blattförmigen Materials besteht.

4. Heizungssystem nach einem der Ansprüche 1 bis 3, dadurch gekennzeichnet, daß die Leitung (5) einen parallelogrammförmigen Querschnitt aufweist.

5. Heizungssystem nach Anspruch 4, dadurch gekennzeichnet, daß der Querschnitt der Leitung (5) die Form eines Rhombus hat.

## Revendications

1. Un système de chauffage comprenant au moins un élément chauffant rayonnant (1) comportant un brûleur, des moyens d'alimentation pour fournir de l'air au brûleur et des moyens d'échappement pour le passage du gaz d'échappement provenant du brûleur; ce système comprenant une canalisation (5) comportant un premier passage (9) qui communique avec les moyens d'alimentation en air pour le système de chauffage, et un second passage (8) qui communique avec les moyens d'échappement du système de chauffage, chacun de ces passages (9, 8) étant ouverts à au moins une extrémité, de façon que le premier passage (9) puisse fournir de l'air aux moyens d'alimentation, et que le gaz d'échappement puisse s'échapper du second passage (8), ce système comprenant en outre un tube (4) disposé de façon pratiquement horizontale, dont une extrémité communique avec le brûleur et dont l'autre extrémité communique avec les moyens d'échappement, pratiquement à la même position que le brûleur; caractérisé en ce que les moyens d'alimentation en air sont placés au-dessus du tube (4), qui fonctionne à la manière d'un élément chauffant; en ce que les moyens d'échappement de gaz sont disposés au-dessus des moyens d'alimentation en air; et en ce que les premier et second passages (9, 8) sont en relation mutuelle d'échange de chaleur, pour transférer de la chaleur du second passage (8) vers le premier passage (9).

2. Un système de chauffage selon la revendication 1, dans lequel la canalisation (5) comprend au moins un morceau d'un matériau consistant en une seule feuille qui a été plié et mis en forme pour définir les premier et second passages (9, 8).

3. Un système de chauffage selon la revendication 2, dans lequel la canalisation (5) est formée par des longueurs unitaires (5A) accouplées ensemble en série, et chacune de ces longueurs (5A) est constituée par un tel morceau de matériau consistant en une seule feuille.

4. Un système de chauffage selon la revendication 1, 2 ou 3, dans lequel la canalisation (5) a une section droite en forme de parallèlogramme.

5. Un système de chauffage selon la revendication 4, dans lequel la canalisation (5) a une section droite en forme de losange.

FIG.1.

FIG. 2

FIG. 3

FIG. 4